# EUROPEAN PATENT APPLICATION

(11) **EP 3 742 020 A1**
(43) Date of publication of application: **25.11.2020**
(21) Application number: 18900442.7
(22) Date of filing: 15.01.2018
(51) Int. Cl.: F16G 13/06

(54) **SEALED CHAIN**

(71) Applicant: Daido Kogyo Co., Ltd., Kaga-shi, Ishikawa 922-8686 (JP)
(72) Inventor: NAGAE,Masahiro, Kaga-shi, Ishikawa 922-8686 (JP); HAYASHI,Kohei, Kaga-shi, Ishikawa 922-8686 (JP)
(74) Representative: Oxley, Robin John George
(86) International application number: PCT/JP2018/000882
(87) International publication number: WO 2019/138585

(57) **Abstract**

When a large tensile load acts on a seal chain, the seal chain deforms such that a bush bends and a projection amount of a bush projecting portion is reduced. An enlarged portion L is formed in an outer diametric direction on a bush projecting portion 26a of the bush 26 projecting out of an inner plate 25 by plastically deforming by a punch or the like. Thereby, a removal resistant force of the inner plate 25 with respect to the bush 26 increases. The bush is formed of medium carbon steel or alloy steel, has flat hardness of 400 to 700 [HV] across an entire cross section and prevents cracks from being generated on the bush end surface in plastically deforming the enlarged portion L on the bush projecting portion 26a.

## Description

### Technical Field

The present invention relates to a roller chain for use in power transmission or in conveyance of a transportation machine such as a motorcycle, a general industrial machine and the like. More specifically, the present invention relates to a seal chain wherein lubricant oil such as grease is retained between a pin and a bush by a seal ring. It is noted that in the present invention, the roller chain is not limited to be a roller chain in a narrow sense in which a roller is fitted around a bush but is defined to include a bush chain from which a roller is omitted.

### Background Art

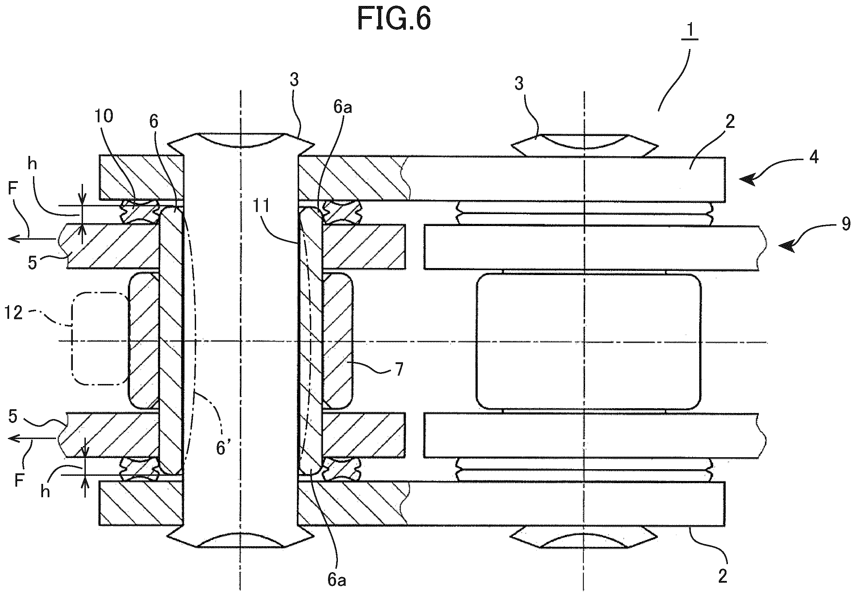

In general, as illustrated in FIG. 6, a seal chain 1 is a roller chain in which outer links 4 in each of which both end portions of a pair of outer plates 2, 2 are linked by pins 3 are linked alternately and endlessly with inner links 9 in each of which both end portions of a pair of inner plates 5, 5 are linked by bushes 6 and in which a roller 7 is fitted around the bush 6 by inserting the pin 3 into the bush 6. The seal chain 1 is constructed by projecting the both end portions of the bush 6 from outer side surfaces of the inner plates 5 by a predetermined amount and by sandwiching a seal ring 10 between an inner side surface of the outer plate 2 and the outer side surface of the inner plate 5 so as to surround the bush projecting portion 6a (see Patent Literature 1 for example).

The seal chain 1 is used by wrapping around sprockets to transmit power from a driving sprocket to a driven sprocket. In transmitting the power, the seal chain 1 deflects and causes relative rotation between the pin and the bush. Lubricant oil such as grease is sealed in a bearing portion 11 between the pin 3 and the bush 6, and the lubricant oil is held by the seal ring 10 so as not to scatter, so that less wear occurs between the pin 3 and the bush 6 and wear elongation can be suppressed for a long period of time. Still further, an end surface of the bush projecting portion 6a projecting out of the inner plate 5 abuts with the inner side surface of the outer plate 2 to prevent the seal ring 10 from being excessively pressed and squeezed. Thus, the function of the seal chain 1 is kept for a long period of time.

### Citation List

### Patent Literature

Patent Literature 1: Japanese Patent Application Laid-open No. 2011-163388

### Summary of Invention

### Technical Problem

In a case where the seal chain 1 is used as a drive chain of a motorcycle in particular, an extremely large tensile load acts on the chain in abruptly starting or braking or in landing after a jump. In such a case, the bush 6 is curvedly deformed as exaggeratedly indicated by a dot chain line, because the bearing portion 11 includes a predetermined gap for relatively rotating the pin 3 and the bush 6 and a pressing force from a sprocket teeth 12 acts on the bush 6 through the roller 7 and a large tensile force F acts on the inner plate 5. Such deformation causes a state in which a projection length h of the bush projecting portion 6a is reduced and such state is kept as it is even after when the large tensile force F described above is eliminated. If such state is repeated by a number of times, the bush projection length h is reduced further. This phenomenon causes the inner plate 5 to be pulled out with respect to the bush 6 in a direction of the length.

In this state, the seal ring 10 is excessively squeezed between the inner plate 5 and the outer plate 2 and may break as the seal chain 1 flexes. Thereby, there is a possibility that the lubricant oil held in the bearing portion 11 scatters and a long-life performance of the seal chain described above is hampered.

Then, it is conceivable to increase a press-fitting force of the inner plate 5 and the bush 6, i.e., a removal resistant force, by increasing a fastening margin which is a difference between an inner diameter of a bush hole and an outer diameter of the bush 6. In general, the bush 6 of the seal chain (roller chain) 1 is composed of carbon steel or alloy steel containing around 0.20 [wt%] of carbon C and a surface thereof is normally carburized and quenched to have hardness (Vickers hardness) of 750 to 900 HV in general to reduce abrasion caused by bending slide of the pin 3 or by sliding with the roller 7. The seal chain 1 has an optimum range of the fastening margin, and if the fastening margin is excessive, plastic deformation of the inner plate hole and the bush advances in contrary and the press-fitting force is lowered in contrary.

Accordingly, the present invention aims at providing a seal chain that solves the above-mentioned problems by plastically deforming a project portion of a bush in an outer diametric direction.

### Solution to Problem

The present invention discloses a seal chain wherein inner links (29) in each of which both end portions of a pair of outer plates (22) are linked by pins (23) are alternately and endlessly linked with outer links (24) in each of which both end portions of a pair of inner plates (25) are linked by bushes (26), characterized in that
both end portions of each bush (26) project out of outer side surfaces (25a) of the inner plates (25) and a seal ring (30) is disposed so as to be sandwiched between an inner side surface (22a) of the outer plate and the outer side surface (25a) of the inner plate so as to surround each bush projecting portion (26a), and
the bush projecting portion (26a) has an enlarged portion (L) plastically deformed in an outer diametric direction.

The bush is formed of medium carbon steel containing 0.30 to 0.50 [wt%] of carbon or alloy steel containing rare metal such as chrome, molybdenum and vanadium and having flat hardness of Vickers hardness of 400 to 700 [HV] across an entire cross section including a surface.

A projection amount (h) of the bush projecting portion (26a) projecting out of the outer side surface (25a) of the inner plate falls within a range of 5 to 20 [%] of the bush outer diameter (D).

An outer diameter (D') of the enlarged portion (L) formed on the bush projecting portion (26a) is larger than the bush outer diameter (D) by 0.5 to 2.0 [%] of the bush outer diameter (D).

Note that while reference signs within parentheses collate with those described in drawings, they do not by any means affect the description of scopes of claims.

### Advantageous Effects of Invention

Because the bush projecting portion is provided with the enlarged portion formed by plastically deforming the bush projecting portion in the outer diametric direction in the seal chain wherein the seal ring is disposed between the inner side surface of the outer plate and the outer side surface of the inner plate so as to surround the bush projecting portion, even if a large tensile load acts on the chain and the bush is to be bendingly deformed, a removal resistant force against a force by which the inner plate otherwise moves in an axial direction with respect to the bush increases by the enlarged portion. Then, the enlarged portion prevents the projection amount of the bush projecting portion from being reduced by the move of the inner plate and can keep a long-life performance of the seal chain by preventing the seal ring from being excessively squeezed.

The bush is formed of medium carbon steel or alloy steel and has the flat hardness of 400 to 700 [HV] across an entire cross section, so that even if the bush projecting portion is caulked so as to form the enlarged portion by applying a pressing force by a punch or the like, less cracks are generated on the bush end surface. Thereby, it is possible to prevent the seal ring from being flawed and to keep the long-life performance of the seal chain.

The projection amount of the bush projecting portion is set within the range of 5 to 20 [%] of the bush outer diameter. Then, in an excessively smaller case where the projection amount is smaller than 5 [%], it is unable to form the enlarged portion sufficiently by being hampered by the bush hole. Then, there is a possibility that it is unable to obtain an enough removal resistant force of the inner plate, a force caused by caulking by the punch or the like may directly act on the bush hole, may plastically deform the bush hole and may drop fatigue strength of the inner plate. In an excessively larger case where the projection amount is larger than 20 [%], an approximately straight part extending from the bush and in which no enlarged portion is formed remains in the bush projecting portion, and a removal resistance force of the inner plate is weak at such part.

In a case where the outer diameter of the enlarged portion at the bush projecting portion is smaller than the bush outer diameter by more than 0.5 [%] of the bush outer diameter, it is unable to obtain an enough removal resistant force with respect to the inner plate and in a case where the outer diameter is larger than the bush outer diameter by more than 2.0 [%]of the bush outer diameter, there is a possibility that cracks are generated on the bush end surface by the plastic deformation of the enlarge portion.

### Brief Description of Drawings

FIG. 1 is a section view illustrating a seal chain according to an embodiment of the present invention and illustrates a same part with a section part illustrated in FIG. 6.
FIG. 2 is a section view illustrating caulking of a bush of the seal chain.
FIG. 3 is graph indicating hardness of a cross section of the bush and comparing a conventional bush with an inventive bush.
FIG. 4 is a section view illustrates types of inner links, wherein FIG. 4A illustrates one having a small bush projection amount and FIG. 4B illustrate one having a large bush projection amount.
FIG. 5 is a frequency distribution chart comparing a bush fitting force of a prior art bush with that of the present invention.
FIG. 6 is a plan view illustrating a partly sectioned conventional seal chain.

### Description of Embodiments

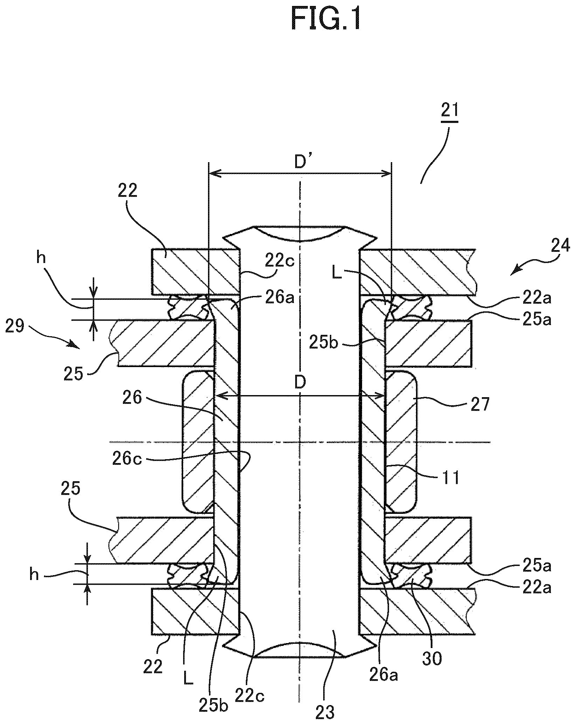

An embodiment of the present invention will be described along with the drawings. As illustrated in FIG. 1, a seal chain 21 includes outer links 24 in each of which both end portions of a pair of outer plates 22 are linked by pins 23 and inner links 29 in each of which both end portions of a pair of inner plates 25 are linked by bushes 26 and in which rollers 27 are fitted around the bushes 26. The seal chain 21 is constructed by alternately and endlessly linking the outer links 24 with the inner links 29 by inserting the pin 23 into the bush 26 and by caulking the pin 23. The bush 26 projects out of an outer side surface 25a of the inner plate 25 by a predetermine length (projection amount) h and is fixed by being fitted with a bush hole 25b of the inner plate 25. A seal ring 30 formed of an O-ring having an X shape in section is disposed so as to surround the bush projecting portion 26a projecting out of the inner plate 25. The seal ring 30 seals lubricant oil of a bearing portion 11 by being compressed by a predetermined amount between an inner side surface 22a of the outer plate 22 and the outer side surface 25a of the inner plate 25. While the shape of the section of the seal ring 30 is the X shape having four lip portions in the present embodiment, the present invention is not limited to such shape and may be other shape such as a circle in section.

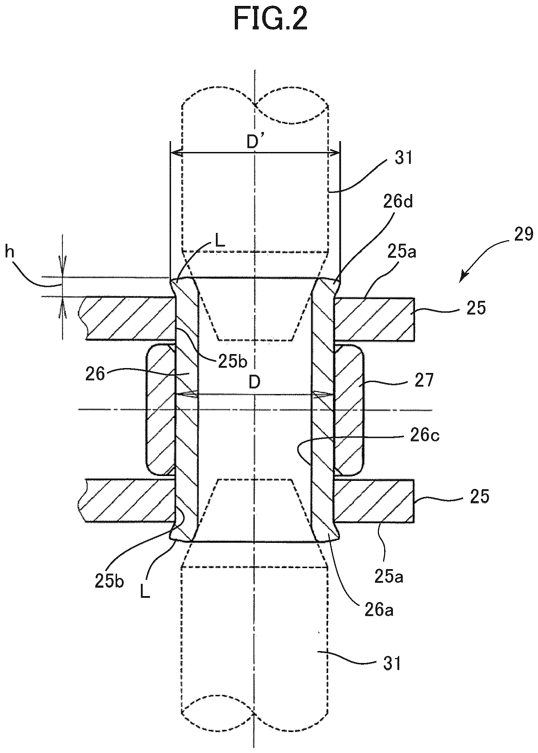

The bush projecting portion 26a is plastically deformed so as to be enlarged in an outer diametric direction as an enlarged portion L in a state in which the bush projecting portion 26a fits into the bush hole 25b of the inner plate 25. Specifically, the bush 26 is fitted into the bush hole 25b of the inner plate 25 in a state in which both end portions of the bush 26 project out of the outer side surface 25a of the inner plate 25 by the predetermine length (project amount) h in a state in which the roller 27 is fitted around the bush 26 as illustrated in FIG. 2. That is, conical punches 31, 31 having a tapered shape are introduced into a bush hole 26c from both ends of the bush 26 and are pressed by a predetermined pressing force in a state in which an assembling process of the inner link 29 is completed. Due to the caulking process, the bush projecting portion 26a is formed into the enlarged portion L having a predetermined diameter (D') as compared to the bush outer diameter D by plastically deforming so as to be widened in the outer diametric direction in a state in which an outer circumferential surface is held by the bush hole 26c.

In this state, lubricant oil such as grease is applied to the inner circumferential surface of the bush hole 26c and/or the outer circumferential surface of the pin 23, and the seal ring 30 is attached to the outer circumferential surface of the bush projecting portion 26a having the enlarged portion L. Then, the pin 23 is inserted through the bush hole 26c and is fixed to the outer plate 22 by caulking the both end portions of the pin inserted through the pin hole 22c of the outer plate 22. Thus, the seal chain 21 is assembled by alternately and endlessly linking the inner links 29 with the outer links 24.

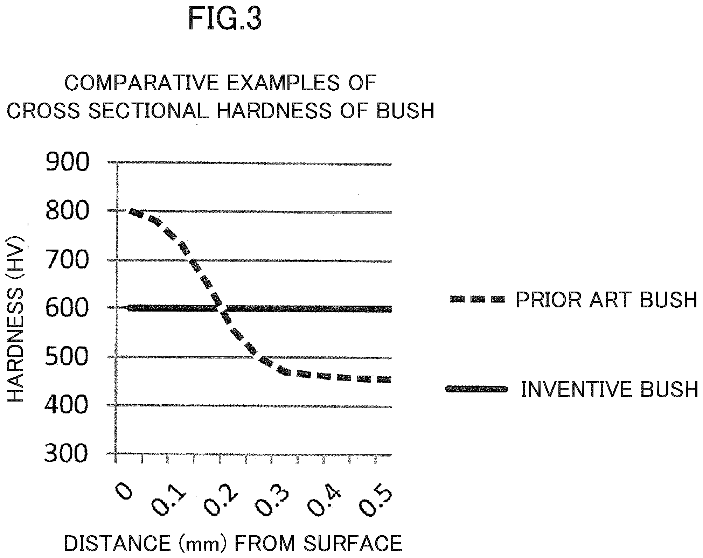

The bush 26 is formed of medium carbon steel containing 0.30 to 0.50 [wt%] of carbon C or alloy steel containing rare metal such as chrome Cr, molybdenum Mo and vanadium V and is treated by heat (quenching, tempering) such that surface hardness thereof becomes 400 to 700 HV (Vickers hardness). The bush 26 has approximately uniform hardness across an entire thickness without being undergoing a carburizing and quenching process like a conventional bush. Although the bush 26 has low surface hardness as compared to the conventional bush, the bush 26 has enough toughness. FIG. 3 is a graph comparing cross sectional hardness of the conventional bush that has undergone through the carburizing and quenching process with that of the abovementioned bush of the present invention. Because the conventional bush has undergone through the carburizing and quenching process, the hardness of the bush surface (inner circumferential surface and outer circumferential surface) is as high as 800 HV Then, the hardness is lowered from the surface to an inside of the cross section and becomes approximately constant. In contrary, because no surface treatment such as the carburizing and quenching process is applied to the bush of the present invention, its hardness is approximately constant (flat) at around 600 HV from the surface of the entire range of the cross section.

Therefore, while the bush 26 is plastically deformed such that the projecting portions 26a of the both ends are enlarged in the outer diametric direction, no crack is generated at the end surface of the bush by the plastic deformation because the bush 26 has the toughness owing to the above-mentioned flat cross sectional hardness. Note that if the plastic deformation of forming the enlarged portion is applied to the conventional bush that has undergone through the carburizing and quenching process, there is a possibility that cracks are generated at end surfaces of the bush, thus damaging or ending up cutting the seal chain.

While the seal chain 21 may be used for a motorcycle for example, there is a case where an excessive tensile load acts on the seal chain 21 in abruptly starting or braking the motorcycle or in landing after a jump. According to the present embodiment however, even if the bush 26 curvedly bends by the excessive tensile load for example, the bush projecting portion 26a is enlarged in the outer diametric direction and blocks the bush hole 25b of the inner plate 25 from moving in the enlarged direction. That is, it is possible to prevent the inner plate 25 from relatively moving with respect to the bush in a direction in which the length (project amount) h of the bush projecting portion 26a is reduced because the bush projecting portion 26a has the enlarged portion L and the bush fitting force (removal resistant force) is increased. This arrangement makes it possible to maintain the length (projection amount) h of the bush projecting portion 26a and prevents the seal ring 30 from being excessively squeezed. Then, it is possible to keep the lubricant oil at the bearing portion 11 by the seal ring for a long period time and to keep the long-life performance by reducing chain elongation by the wear resistant performance of the seal chain 21.

Because the lubricant oil is sealed in the bearing portion 11, the seal chain 21 can keep smooth flexion of the chain and can keep such state for a long period of time. Even though the bush 26 has the surface hardness lower than that of the conventional bush, the bush receives almost no influence of the surface hardness because the enough amount of lubricant oil is always sealed and held by the seal ring 30. Then, the wear elongation performance of the bush is kept for a long period of time.

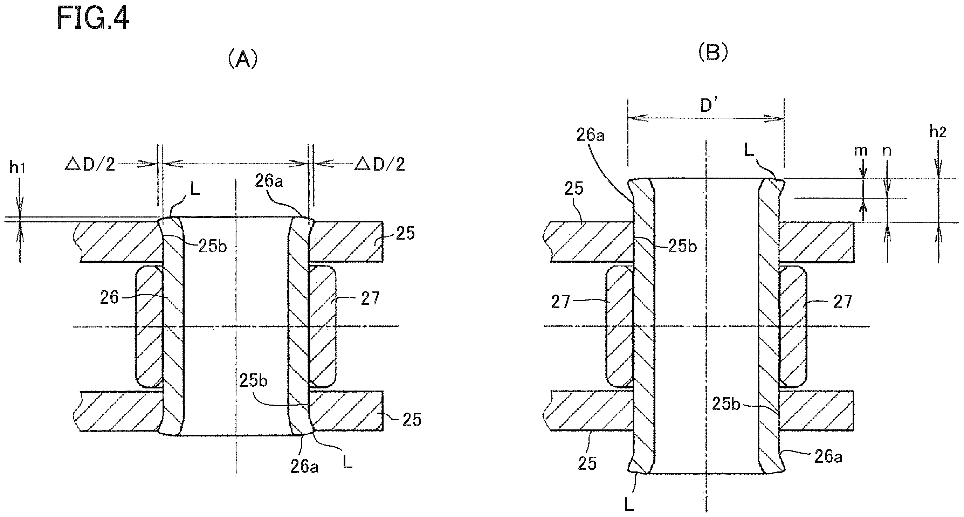

The length (projection amount) h of the bush projecting portion 26a is preferable to be within a range of 5 to 20 [%] of the outer diameter of the bush 26 (bush outer diameter at a part other than the enlarged portion) D. FIG. 4(A) illustrates a case where a length h₁ of the bush projecting portion 26a is smaller than 5 %. In this state, it is unable to form an effective enlarged portion L even if one tries to caulk by the punch described above because the length of the bush projecting portion 26a is not enough. It is also unable to obtain an enough resistant force in a removal direction of the inner plate 25 with respect to the bush 26. Still further, in a state in which the bush projecting portion 26a is excessively small, a large force acts on the bush hole 25b of the inner plate 25 in forming the enlarged portion by the punch 31 described above. Then, the bush hole 25b is plastically deformed so as to be enlarged (ΔD/2), causing a problem that fatigue strength of the inner plate drops.

FIG. 4(B) illustrates a case where a projecting length h₂ of the bush projecting portion 26a is larger than 20 % of the bush outer diameter D. In a case where the projecting portion h₂ is excessively large, the enlarged portion L formed of a plastically deformed and enlarged outer diameter D' becomes an edge side part m of the length h₂ of the bush projecting portion 26a. A remaining part n extends approximately as it is as a straight portion of the bush 26 not plastically deformed. In this state, if a large tensile load acts repeatedly on the seal chain 21, there is a possibility that the inner plate 25 moves relatively through the approximate straight portion n of the bush projecting portion 26a in an axial outer (removal) direction similarly to the conventional seal chain 1.

The outer diameter D' of the enlarged portion L of the bush projecting portion 26a is preferable to be larger than the bush outer diameter D by 0.5 to 2.0 [%] of the bush outer diameter D. If the outer diameter D' is smaller than the bush outer diameter D by more than 0.5 %, the removal resistant force with respect to the inner plate is not enough and if the outer diameter D' is larger than the bush outer diameter D by more than 2.0 %, there is a possibility that cracks are generated on the bush end surface even if the material has large toughness.

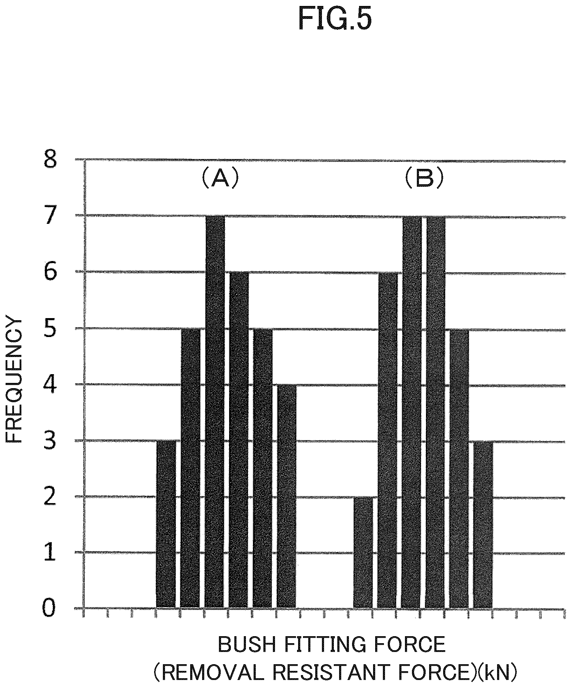

FIG. 5 illustrates frequency distribution of bush fitting forces (removal resistant forces) of a large number of inner links, wherein FIG. 5(A) indicates frequency distribution of the prior art inner links and FIG. 5(B) indicates frequency distribution of the inventive inner links. As compared to the prior art inner links (A), the bush fitting force is apparently improved in the inventive inner links (B), so that a removal resistant force required when a large load is applied can be assured.

### Industrial Applicability

The seal chain can be utilized for transmitting or conveying power such as a drive chain of a motorcycle.

### Reference Sign List

- 21: Seal chain
- 22: Outer plate
- 22a: Inner side surface
- 23: Pin
- 24: Outer link
- 25: Inner plate
- 25a: Outer side surface
- 26: Bush
- 26a: Bush projecting portion
- 29: Inner link
- 30: Seal ring
- L: Enlarged portion
- h: Projection amount
- D: Bush outer diameter

## Claims

1. A seal chain wherein inner links in each of which both end portions of a pair of outer plates are linked by pins are alternately and endlessly linked with outer links in each of which both end portions of a pair of inner plates are linked by bushes, **characterized in that**
both end portions of each bush project out of outer side surfaces of the inner plates and a seal ring is disposed so as to be sandwiched between an inner side surface of the outer plate and the outer side surface of the inner plate and so as to surround each bush projecting portion, and
the bush projecting portion includes an enlarged portion plastically deformed in an outer diametric direction.

2. The seal chain according to claim 1, wherein the bush is formed of medium carbon steel containing 0.30 to 0.50 [wt%] of carbon or alloy steel containing rare metal such as chrome, molybdenum and vanadium and having flat hardness of Vickers hardness of 400 to 700 [HV] across an entire cross section including a surface.

3. The seal chain according to claim 1 or 2, wherein a projection amount of the bush projecting portion projecting out of the outer side surface of the inner plate is within a range of 5 to 20 [%] of a bush outer diameter.

4. The seal chain according to any one of claims 1 through 3, wherein an outer diameter of the enlarged portion formed on the bush projecting portion is greater than the bush outer diameter by 0.5 to 2.0 [%] of the bush outer diameter.
